Europäisches Patentamt

European Patent Office

Office européen des brevets

(11) Numéro de publication: **0 033 264**
**B1**

(12) **FASCICULE DE BREVET EUROPEEN**

(45) Date de publication du fascicule du brevet: 06.11.85

(21) Numéro de dépôt: **81400064.2**

(22) Date de dépôt: **19.01.81**

(51) Int. Cl.⁴: **G 06 F 9/46**

(54) Procédé et dispositif d'arbitrage des conflits d'accès entre une requête asynchrone et un programme en section critique.

(30) Priorité: **22.01.80 FR 8001350**

(43) Date de publication de la demande:
**05.08.81 Bulletin 81/31**

(45) Mention de la délivrance du brevet:
**06.11.85 Bulletin 85/45**

(84) Etats contractants désignés:
**DE FR GB NL**

(56) Documents cités:
**DE-A-2 645 593**

**IBM TECHNICAL DISCLOSURE BULLETIN, vol.
22, no. 3, aoÛt 1979, pages 1290-1293 New
York, U.S.A. D.B. LOMET et al.: "Hardwaresupported critical sections to minimize process
waiting/dispatching"**

(73) Titulaire: **COMPAGNIE INTERNATIONALE POUR
L'INFORMATIQUE CII - HONEYWELL BULL (dite
CII-HB)**
**94, avenue Gambetta**
**F-75020 Paris (FR)**

(72) Inventeur: **Bourrez, Jean-Marie**
**94 avenue Gambetta**
**F-75020 Paris (FR)**

Courier Press, Leamington Spa, England.

## Description

La présente invention concerne des systèmes de traitement de données à base de multiprocesseurs et elle traite plus particulièrement un procédé et un dispositif faisant application de ce procédé destinés à perfectionner l'arbitrage de l'accès aux processus par des requêtes asynchrones quand ces processus se déroulement en sections critiques.

Un système de traitement de données à base de multiprocesseurs est capable d'exécuter simultanément plusieurs processus. Pour permettre au système d'exploitation de gérer les files des processus en attente d'exécution, il est associé à chaque processus un niveau de priorité: le processus le plus prioritaire est le processus de range le plus faible qui est en l'occurrence le rang zéro.

Il est connu du document DE—A—2645593 d'affecter à chaque processus un niveau de priorité permettant à un processus prioritaire en attente d'interrompre le déroulement d'un processus moins prioritaire. Cependant cette méthode ne tient compte que des niveaux de priorité relatifs des différents processus et ne permet donc das de tenir compte de l'état instantané du processus qui pourrait présenter une priorité variable selon la phase dans laquelle il est en train de se dérouler.

Au cours de leur déroulement les processus sont amenés à exprimer des demandes de service. Ces demandes de service sont faites soit à un autre processus soit un processus lui-même. Elles sont appelées requêtes asynchrones (en Anglais Asynchronous Trap) pour exprimer le fait qu'elles vont dérouter le processus concerné de son déroulement normal.

Quand une requête asynchrone est émise par un processus, c'est ce processus qui est chargé de la procédure nécessaire pour obtenir la satisfaction du service demandé. Le processus requérant recherche donc le processus requis parmis les processus en cours de déroulement dans le système de traitement. Si ce processus requis n'est pas en activité, le processus requérant abandonne sa requête en reprend son déroulement. Si le processus requis est en activité, le processus requérant va charger ce processus de l'exécution du service et ce faisant va détourner le processus requis de son déroulement normal.

Cette méthode de traitement présente des inconvénients. En effet, dans le cas où le processus requis était en train de se dérouler dans une section critique le système se trouve placé dans une situation particulière. Le processus est dit dans une phase critique quand la portion de programme en cours d'exécution se situe dans une section critique c'est-à-dire que cette exécution mobilise une ressource critique. Une ressource est dite critique quand elle est unique pour le système: elle ne peut être accédée que par un seul processus à la fois. Quand un processus prend possession d'une ressource critique, du même coup, il en interdit l'accès aux autres processus et cela aussi longtemps que le processus le jugera utile. Si un tel processus est requis, cette suspension n'entraîne pas la levée de la réserve et la ressource continuera à être inacessible aux autres processus. Cette situation peut entraîner par exemple la paralysie du système si cette ressource critique est nécessaire à la poursuite du déroulement des autres processus.

Pour pallier cette situation la présente invention propose des moyens pour mieux juger de l'opportunité de:

soit interrompre le déroulement du processus requis se trouvant en section critique pour satisfaire le service demandé par la requête asynchrone, quitte à immobiliser une ressource critique,

soit poursuivre le déroulement du processus requis en section critique jusqu'à libération de la ressource critique, quitte à différer la satisfaction du service demandé par la requête asynchrone.

Le document IBM Technical Disclosure Bulletin, vol 22, N° 3, août 1979, page 1290—1293 illustre des méthodes utilisées pour traiter le problème des interruptions asynchrones appliquées à un processus se trouvant en section critique. Une méthode consiste à armer (SEIZE) un verrou ("latch") chaque fois que le processus entre en section critique et à interdire toute interruption extérieure tant que le verrou n'est pas désarmé (RELEASE) par une sortie de la section critique.

Une autre méthode consiste à limiter la durée d'attente de l'interruption appliquée au processus en section critique. Aucune de ces méthodes de permet un arbitrage précis entre l'importance de l'interruption et l'importance de l'état critique du processus en section critique.

De plus ces méthodes n'envisagent pas les problèmes qui peuvent se poser lorsque le processus contient des programmes imbriqués pouvant présenter des sections critiques d'importances différentes.

Pour cela la présente invention propose l'institution d'une échelle de valeurs servant à référencer:

d'une part l'importance d'une requête asynchrone,

d'autre part les conséquences de la suspension d'un processus en section critique,

Un moyen commode pour construire cette échelle de valeurs est de faire référence aux anneaux de protection d'accès aux processus. Comme cela est expliqué dans la description du mode préféré de l'invention, de la sorte le programmeur saura se référer aux rangs d'anneaux des processus concernés.

Les valeurs de cette échelle sont définies par un nombre à 2 chiffres: le chiffre des dizaines est le rang de l'anneau associé à la valeur concernée et le chiffre des unités est une interpolation à l'intérieur de l'intervalle situé entre l'anneau désigné par chiffre des dizaines et l'anneau de range supérieur.

L'invention telle que revendique peut être résumés du la façon duivante.

A chaque requête asynchrone le programmeur associe une valeur qu'il estime en fonction de l'importance de service demandé.

A chaque section critique, le programmeur attribue une valeur qui est, par exemple, la mesure de la conséquence de l'immobilisation de la ressource critique par le processus requis pour !a poursuite du fonctionnement du système de traitement de données.

Dans ces conditions, quand un processus requérant émettra une requête à l'endroit d'un processus requis, la satisfaction de la requête sera soumise à la confrontation de la valeur associée à la requête aux valeurs associées aux états critiques en vigueur pour le processus requis.

Si la valeur associée à la requête asynchrone est plus faible que la valeur associée à la section critique en viguer ayant la valeur associée la plus faible, la priorité est accordée à la requête asynchrone et le processus requis est interrompu au profit de la requête asynchrone. Pour contre, aussi longtemps qu'il existe une section critique de valeur inférieure à la valeur de la requête asynchrone cette dernière devra attendre la sortie du processus de cette ou ces sections critiques. Dans ce cas la priorité est donnée à la libération de la ressource critique.

Cette invention apporte, en outre, l'avantage de permettre une compatibilisation précise des sections critiques en vigueur dans le cas des processus mettant en jeu des programmes imbriqués (en anglais Nested program). En effet, quand une section critique contient un programme imbriqué, celui-ci peut à son tour contenir une ou plusieurs sections critiques pouvant d'ailleurs avoir des valeurs associées différentes. A leur tour, une de ces sections critiques peut contenir un programme imbriqué contenant lui aussi une ou des sections critiques. Ainsi de suite au fur et à mesure que la profondeur d'imbrication s'accroît il peut y avoir accroissement du nombre des sections critiques ouvertes. Pour toutes ces sections critiques les ressources critiques correspondantes seront immobilisées aussi longtemps que les sections critiques ne sorent pas fermées.

L'existence de programmes imbriqués présente donc le risque de superposer des états critiques. La comptabilisation des sections critiques en vigeur permet à tout instant de connaître les ressources critiques réservées et par conséquent les valeurs de section critique à opposer à une éventuelle requête asynchrone. A cet effet l'invention telle qu'elle est caractérisée dans les revendications a pour objet un procédé d'arbitrage, dans un système de traitement de données, des tentatives de réquisition d'un processus pouvant présenter des phases de fonctionnement en section critique par une ou des requêtes asynchrones.

L'invention vise également un système de traitement de données mettant en oeuvre le procédé de l'invention.

Les figures 1(a), 1(b) et 1(c) représentent un BLOC DE CONTROLE DE PROCESSUS ETENDU conforme à l'invention.

La figure 2 représente le contenu de l'OCTET 0 du MOT 0 du bloc de contrôle de processus étendu de la figure 1.

La figure 3 représente le contenu de l'OCTET 3 du MOT 0 du bloc de contrôle de processus étendu de la figure 1.

La figure 4 représente le contenu de l'OCTET 3 du MOT 1 du bloc de contrôle de processus étendu de la figure 1.

La figure 5 est une représentation schématique d'un système de traitement de données à base de multiprocesseurs conforme au mode préféré de réalisation de l'invention.

La figure 6 est une représentation schématique d'un des processeurs du système de traitement de données de la figure 5.

Les figures 7a et 7b sont des représentations de taille de symbole utilisés dans la figure 6.

La figure 8 est une représentation symbolique du déroulement de programmes imbriqués comprenant des sections critiques.

Les figures 9a et 9b représentent le format d'une instruction d'entrée en section critique ENCS et du registre général associé à cette instruction.

La figure 10 représente l'ordinogramme du déroulement d'une instruction d'entrée en section critique ENCS.

Les figures 11a et 11b représentent le format d'une instruction de sortie de section critique EXCS et du registre général associé à cette instruction.

La figure 12 représente l'ordinogramme du déroulement d'une instruction de sortie de section critique EXCS.

Dans la réduction des programmes à exécuter dans une système de traitement de données le programmeur divise les programmes en TRAVAUX (en anglais Job), ces travaux étant eux-êmes divisés en PROCESSUS (en Anglais Process). Un processus constitue un ensemble exécutable par un processeur. Le fonctionnement du système de traitement de données est assuré par un ensemble de circuits et de firmware désigné par le nom de SYSTEME D'EXPLOTATION. Le firmware est constitué d'instructions de commande contenues dans une mémoire spécialisée la MEMOIRE DE CONTROLE et dans une zone réservée, inaccesible au programmeur de la MEMOIRE PRINCIPALE. Nous appellerons par la suite cette zone réservée de la mémoire principale par le nom de MEMOIRE DE CONTROLE COMPLEMENTAIRE. Au fur et à mesure de l'avancement de l'exécution des programmes, il est nécessaire d'effecteur des déplacements de processus: certains processus doivent être chargés dans un processeur, d'autres processus doivent être suspendus et retirés du processeur en attente d'un évènement, d'autres processus doivent être retirés parcequ'ils sont arrivés en fin d'exécution. Ces opérations de déplacement de processus sont effectuées par un module de système d'exploitation qui est appelé DISTRIBUTEUR DE PROCESSUS (en Anglais Dispatcher). Afin de permettre au distributeur de processus d'accomplir sa mission le système d'exploitation constitue pour chaque processus un bloc logique appelé BLOC DE CONTROLE DE PROCESSUS désigné par PCB (abréviation de Process Control Block). Ces blocs contiennent tous les renseignements permettant:

soit de lancer le processus en exécution dans un processeur

soit de suspendre un processus en cours d'exécution en conservant son étant au moment de la suspension soit de reprendre un processus qui a été suspendu.

Dans un système de traitement de données multiprocesseur les blocs de contrôle de processus sont stockés dans la mémoire de contrôle complémentaire en raison du fait qu'ils doivent pouvoir être accédés par tous les processeurs. Le distributeur de processus dispose des moyens pour accéder aux blocs de contrôle de processus. Le fonctionnement du distributeur de processus est décrit dans la littérature. Une réalisation originale se trouve décrite dans le document de brevet FR—A—2 471 631 publié le 19.06.81. Il est simplement précisé que dans la réalisation préférée de l'invention les processeurs sont banalisés. Il faut entendre par là qu'il n'y a pas de processeur maître ayant l'accès réservé au distributeur de processus. Au contraire, dans le système décrit c'est le premier processeur disponible qui prend possession du distributeur de processus.

Un des moyens de la présente invention consiste en une extension du bloc de contrôle de processus pour y stocker des informations complémentaires destinées à renseigner le distributeur de processus sur la situation du processus au niveau des classes critiques ainsi que sur les requêtes asynchrones parvenues au processus.

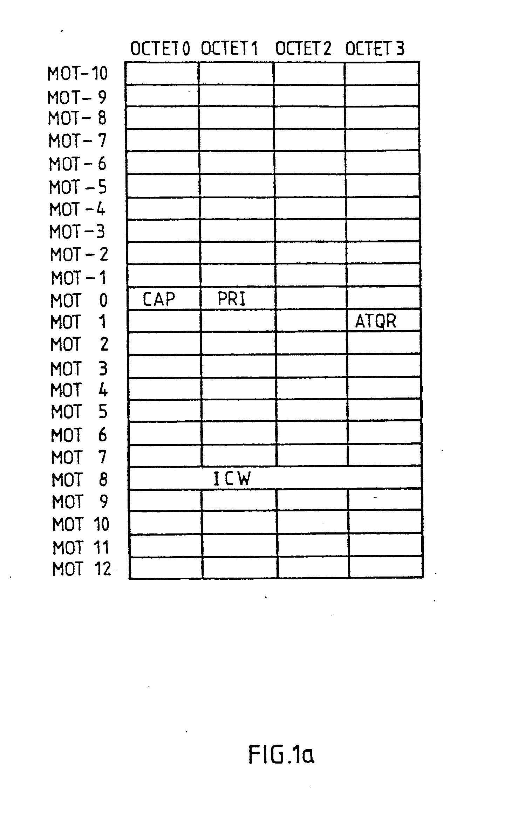

Sur les figures 1(a) 1(b) et 1(c) est représenté un BLOC DE CONTROLE DE PROCESSUS ETENDU. Pour simplifier la présente description ne sont précisées que les données ayant directement trait avec la présente invention.

Sur la figure 1a sont représentés les MOTS 10 à 13 du bloc de contrôle de Processus PCB

Les MOTS −10 à −1 constituent le préambule. Ce préambule contient des renseignements concernant les temps caractéristiques de l'explitation du processus.

Le MOT 0 contient 2 octets concernant l'invention

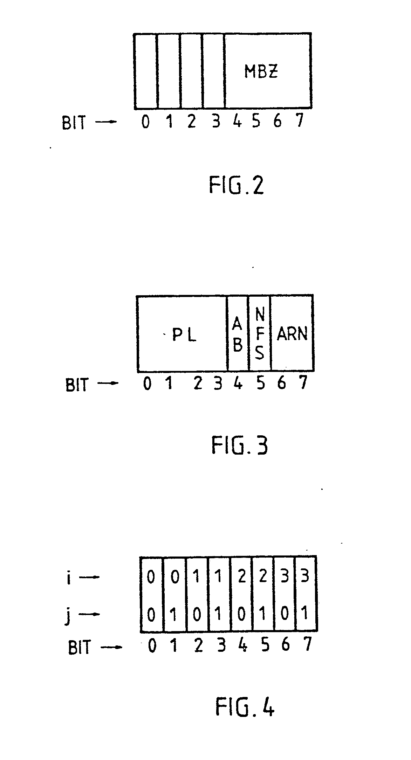

l'octet 0 désigné par CAP (abréviation de CAPACITY) est décrit sur la figure 2. Cet octet sert, en particulier, à préciser si le bloc de controle de processus est étendu ou non

l'octet 1 désigné par PRI (abréviation de PRIORITY) est décrit sur la figure 3. Cet octet contient des renseignements concernant entre autres la priorité du processus.

Le MOT 1 contient 1 octet intéressant l'invention:

l'octet 3 désigné par ATQR (abréviation de Asynchronous Trap Flags for Critical Section) est décrit sur la figure 4.

Les MOTS 4 et 5 contiennent la définition de l'espace d'adressage réservé au processus.

Le MOT 8 désigné par ICW (abréviation de Instruction Counter Word) mémorise le contenu du COMPTEUR INSTRUCTION soit au moment du lancement de processus, soit au moment de l'arrêt du processus suivant le cas. Ce contenu contient donc les données à charger dans le compteur d'instruction du processeur quand le processus est lancé ou relancé. Ce mot est important pour l'invention car il définit le RANG D'ANNEAU DU PROCESSUS PRN (abréviation de Process Ring Number). Ce rang d'anneau du processus PRN définit les droits d'accès du processus vis-à-vis des autres processus.

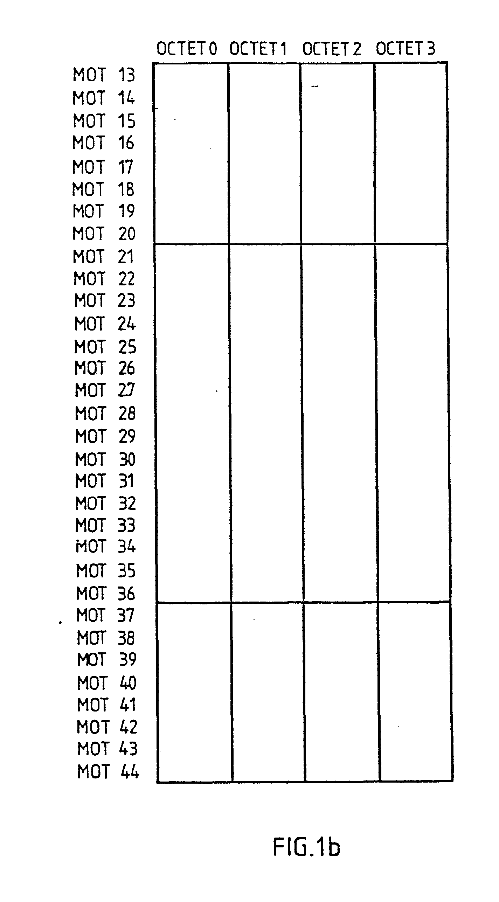

Sur la figure 1b sont représentés les MOTS 13 à 44 du bloc de contrôle de processus PCB.

Les MOTS 13 à 20 servent à mémoriser le contenu des 8 REGISTRES DE BASE du processus. En fait, dans la réalisation présente de l'invention, ces 8 registres de base sont transférés dans une MEMOIRE BLOC-NOTE SPU (abréviation de Scratch Pad Unit) au moment du lancement ou de relancement du processus. Le registre de base RB0 est situé à l'adresse 0 de la mémoire bloc note SPU, le registre de base RB1 à l'adresse 1, ainsi de suite jusqu'au registre de base RB8 qui se trouve à l'adress 8. Il existe une MEMOIRE BLOC NOTE SPU par processeur: la mémoire bloc-note SPUO est associée au processeur O, la mémoire bloc-note SPU1 est associée au processeur 1, ainsi de suite.

Les MOTS 21 à 36 servent à mémoriser le contenu des 16 REGISTRES GENERAUX du processus. Ces registres généraux sont également transférés dans la mémoire bloc-note du processeur quand le processus est lancé ou relancé. Le REGISTRE GENERAL RG0 est situé à l'adresse 9, le REGISTRE GENERAL RG1 à l'adresse 10 ainsi de suite jusqu'au REGISTRE GENERAL RG16 qui se trouve à l'adresse 25.

Les MOTS 37 à 44 servent à mémoriser le contenu des 4 REGISTRES SCIENTIFIQUES qui sont des registres ayant chacun une longueur de 2 mots. Ces registres scientifiques sont également transférés dans la mémoire bloc-notes dans les adresses 26 à 33.

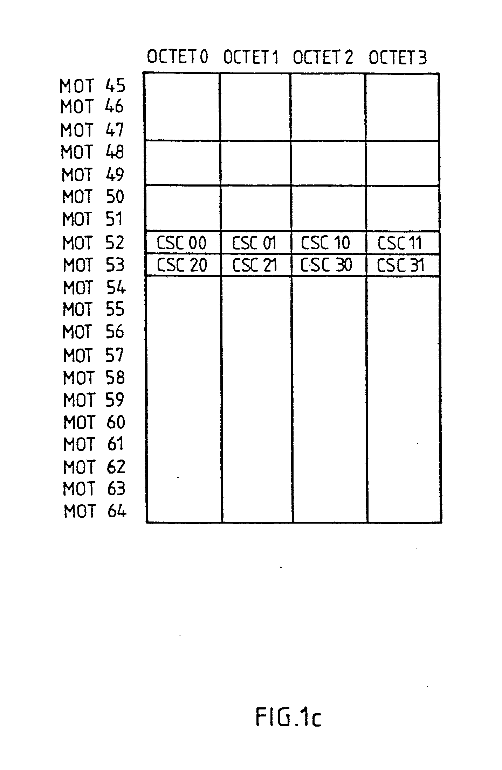

La figure 1C représente les MOTS 45 à 64 du BLOC DE CONTROLE DE PROCESSUS.

Les mots 45, 46 et 47 servent à stocker les messages d'exception émis par le module de MANIPULATION DES ERREURS (en anglais Exception Handler) du système d'exploitation. Ces messages sont destinés à faciliter la récupération des fonctionnements défectuex.

Les MOTS 48 et 49 ainsi que les MOTS 50 et 51 contiennent des paramètres concernant le temps d'exécution du processus.

Les MOTS 52 et 53 servent à mémoriser le contenu di 8 compteurs d'IMBRICATION DE

SECTION CRITIQUE, CSC00, CSC01, CSC10, CSC11, CSC20, CSC21, CSC30 et CSC31. Ces compteurs CSCij (abréviation de Critical Section Counter) sont les compteurs d'imbrication des sections critiques. L'indice i désigne l'anneau associé à la section critique et l'indice j désigne la densité de la section critique dans l'anneau. La signification de ces indices sera vue ultérieurement. Ces compteurs servent à comptabiliser le nombre d'INSTRUCTIONS D'ENTRE EN SECTION CRITIQUE recontrées ainsi que le nombre d'INSTRUCTIONS DE SORTIE DE SECTION CRITIQUE. Comme il sera vu plus loin à chaque instruction d'entrée en section critique comme à chaque instruction de sortie critique, le programmeur doit affecter une CLASSE D'ETAT CRITIQUE représentée par les INDICES i et j. Chaque fois que le processeur recontrera une instruction d'entrée en section critique il ajoutera une unité au contenu du compteur CSCij correspondant au niveau d'état critique de cette instruction. Inversement à chaque fois que le processeur rencontrera une instruction de sortie de section critique il retranchera une unité au contenu du compteur CSCij correspondant au niveau critique de cette instruction. De la sorte, si le compteur CSCij a été mis à zéro au départ, ce qui est toujours le cas, ce compteur mesure la profondeur d'imbrication des zones critiques. Cette notion d'imbrication sera vue ultérieurement. Si le contenu de ce compteur est nul cela signifie que le programme n'est pas dans une section critique de classe ij. Il faut remarquer que dans la réalisation présente de l'invention les compteurs de section critique CSCij ayant une largeur d'un octet leur capacité maximale de comptage est de 256.

Les MOTS 54 à 64 sont des mots mis en réverse pour une utilisation ultérieure.

La figure 2 représente l'OCTET 0 DU MOT 0 de la figure 1. Cet octet est designé par CAP. La signification attachée aux bits de cet octet est la suivant:

le bit 0 concerne la comptabilité du processus

le bit 1 concerne l'usage des dispositifs scientifiques

le bit 2 concerne l'invention puisqu'il définit le type de bloc de contrôle de processus concerné. Si ce bit est à zéro cela signifie que le bloc de contrôle de processus n'est pas étendu et par conséquent les mots 45 à 64 n'existent pas. Si ce bit est à un cela signifie que le bloc de contrôle de processus est du type étendu. Cette disposition est utilisée pour permettre au système d'exploitation d'éxecuter des programmes même s'ils n'utilisent pas le mode étendu, ce qui est avantageux pour les programmes écrits pour les machines antérieures.

les bits 4 à 7 désignés par MBZ (abréviation de Must de Zero) servent au contrôle de vraisemblance de cet octet: pour que cet octet soit accepté par le système d'exploitation, ces bits doivent être olbigatoirement nuls. Dans le cas contraire un incident est signalé.

La figure 3 représente l'OCTET 1 du MOT 0 de la figure 1. Cet octet est désigné par PRI. La signification attachée aux bits de cet octet est la suivant:

les bits 0, 1, 2 et 3 désignés par PL (abréviation de Priority level) servent à définir le niveau de priorité du processus concerné.

le bit 4 désigné par AB (abréviation de Alarm Bit) est un drapeau qui est positionné à l quand aucune section critique ne s'oppose au service de la requête asynchrone.

le bit 5 désigné par NFS (abréviation de Non Functionally Significant) est un bit non utilisé par le système d'exploitation.

les bits 6 et 7 désignés par ARN (abréviation de Asynchronous Trap Ring) servent, quand une requête asynchrone est reçue par le processus à enregistrer le RANG DE L'ANNEAU DE PRIORITE de cette requête asynchrone. Ce rang de l'anneau de priorité ARN indique la priorité du service demandé par la requête asynchrone. Il est à noter que le service demandé ne sera pris en compte que s'il est plus prioritaire que le processus en cours d'exécution dans le processeur. C'est-à-dire que le nombre représentant le rang de l'anneau ARN sera plus faible que le nombre représentant le rang d'anneau du processus PRN qui est défini dans le mot 8 du bloc de contrôle de processus.

La figure 4 représente l'OCTET 3 DU MOT 1 de la figure 1. Cet octet est désigné par ATQR (abréviation de Asynchronous Trap Flag for Critical section). Cet octet contient 8 drapeaux correspondant chacun à ce qui sera appelé par la suite une puissance ou un pouvoir de réquisition de requête asynchrone. En somme, les requêtes asynchrones peuvent avoir 8 pouvoirs de réquisition différents. Ces pouvoirs sont destinés à arbitrer les situations de conflits résultant de la tentative d'utilisation d'un processus travaillant dans une phase critique par une requête asynchrone. En effet l'arbitrage s'effectue en comparant le rang le plus faible des classes de sections critiques occupées par le processus avec le rang du pouvoir de la requête asynchrone. La requête asynchrone ne pourra détourner le déroulement processus à son profit que si le rang de son pouvoir est inférieur au rang le plus faible des classes de section critique.

Comme pour les classes de section critiques, les pouvoirs de réquisition sont répartis suivant 4 anneaux à raison de 2 pouvoirs par anneau. L'anneau 0 correspond au plus grand pouvoir de réquisition et l'anneau 3 au pouvoir de réquisition le plus faible: la loi est evidemment la même que pour les priorités d'accès au processus. L'anneau attribué à une requête asynchrone est représenté sur la figure 4 par l'indice i. A l'intérieur de chaque anneau il existe une position forte de rang 0 et un position faible de rang 1. Cette position est représenté sur la figure 4 par l'indice j.

Compte-tenu de ce qui vient d'être dit, sur la figure 4 le bit 0 représente le drapeau de requête asynchrone ATRQ 00 qui est affecté à la requête de plus grande puissance. Ce bit sera à un si une requête ayant ce niveau de puissance est présente. Il sera à 0 dans le cas contraire. Le bit 1 correspond au drapeau de requête asynchrone ATRQ 01, le bit 2 au drapeau ATRQ 10, le bit 3 au drapeau ATRQ 11, le bit 4 au drapeau ATRQ 20, le bit 5 au drapeau ATRQ 21, le bit 6 au drapeau ATRQ 30 et le bit 7 au drapeau ATRQ 31.

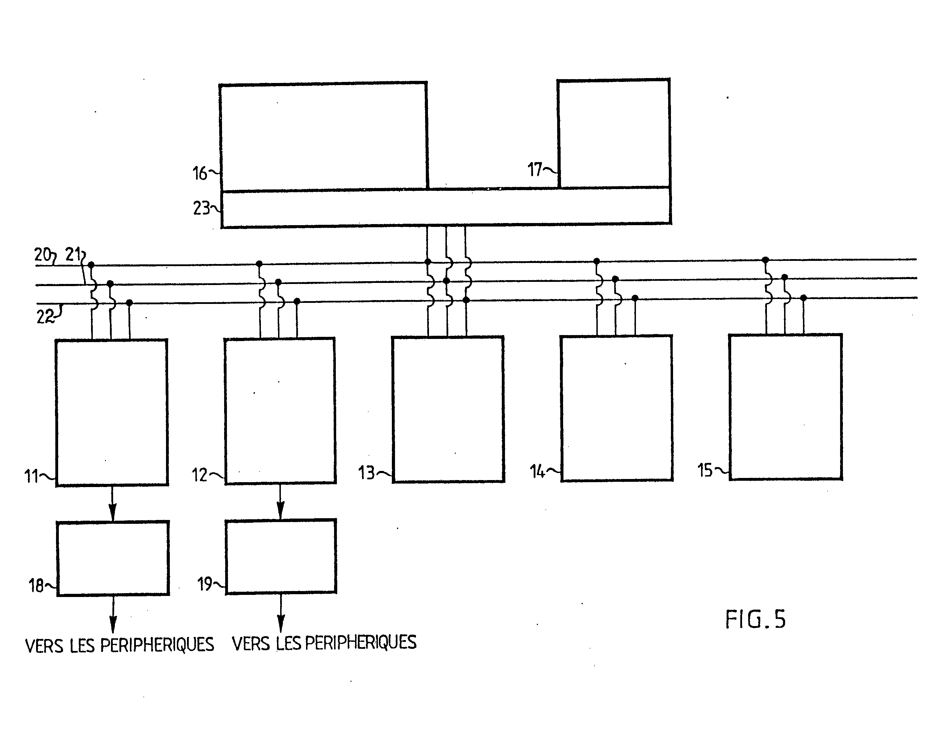

La figure 5 représente sous forme d'un schéma synoptique un système de traitement de données à base de multiprocesseurs conforme à la réalisation préférée de la présente invention. Il s'agit d'un système de traitement de données comprenant des processeurs et des unités d'échange banalisés du type décrit dans le paragraphe 2.3.5.3. page 335 du chapitre 12 du livre de M. Jean-Pierre MEINADIER intitulé "STRUCTURE ET FONCTIONNEMENT DES ORDINATEURS" édité par LAROUSSE dans la SERIE INFORMATIQUE dans la collection SCIENCES HUMAINES ET SOCIALES.

A propos de ce type de système de traitement de données il est dit dans cet ouvrage:

"Cette banalisation est rendue possible par une unité d'interruption qui regroupe l'ensemble des interruptions en provenance des processeurs et unités d'échange (à l'exclusion des déroutements sur erreur de programmes qui sont spécifiques aux différents processeurs). Ainsi lorsqu'une interruption survient, on compare sa priorité à celle du programme de plus basse priorité en cours d'exécution dans les processeurs. Si la priorité de l'interruption est supérieure à celle de ce programme, le processeur qui exécute de dernier est interrompu pour prendre en charge le programme associé à l'interruption; dans le cas contraire l'interruption est mise en attente".

"Un même programme peut, par le jeu des interruptions, voir son exécution commencer dans un processeur, puis être interrompue par un programme plus prioritaire, puis être reprise par un autre processeur qui vient de terminer un travail".

Le système d'exploitation n'est plus le fait d'une processeur particulier. Il est écrit de façon réentrante et, sous réserve de certains verrouillages, peut, le cas échéant, être traité simultanément par plusieurs processeurs".

Le système est composé des unités suivantes:

une mémoire principale (16) qui stocke les programmes et les données nécessaires au fonctionnement des processeurs.

une mémoire de contrôle complémentaire (17) qui contient des microprogrammes de contrôle et des tables associées. Cette mémoire est réservée au firmware et n'est pas accessible aux utilisateurs.

un coordinateur d'accès aux mémoires (23) qui effectue les opérations nécessaires au fonctionnement de la mémoire principale (16) et de la mémoire de contrôle complémentaire (17). En particulier ce coordinateur d'accès aux mémoires (23) contient les verrous qui permettent à tout processeur de se réserver l'accès aux tables du système.

deux processeurs de périphériques (11) et (12) associés respectivement aux unités de contrôle de périphériques (18) et (19).

trois processeurs de traitement (13), (14) et (15).

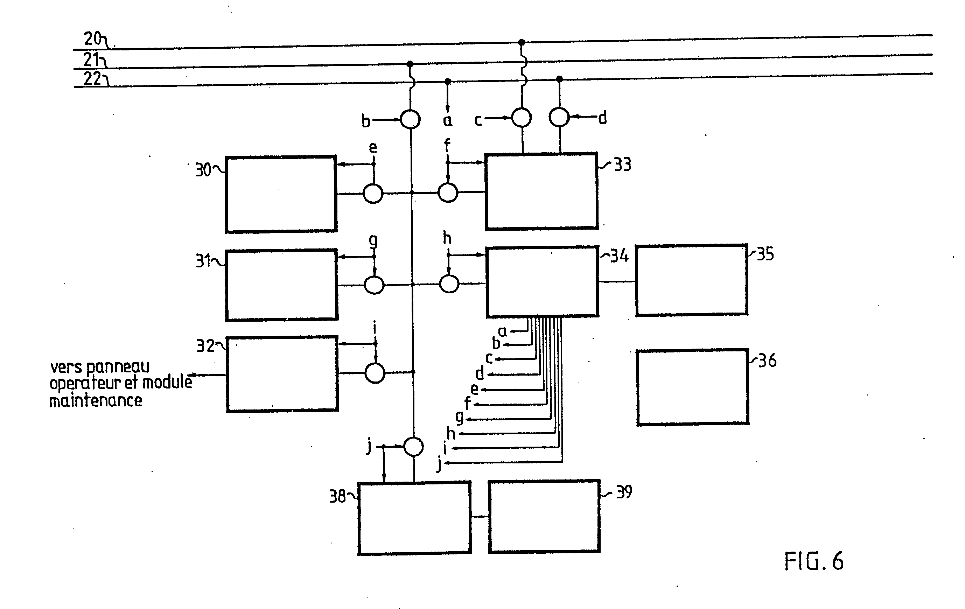

Ce nombre de processeurs de traitement est choisi à titre d'exemple. Une représentation schématique d'un de ces processeurs est données sur la figure 6.

Ces différentes unités sont reliées entre elles par 3 types de liaisons:

un ombibus d'adresse (20) qui permet aux processeurs (11), (12), (13), (14), (15) d'adresser des unités du système d'exploitation avec lesquels ils désirent communiquer

un omnibus de données (21) qui permet aux processeurs (11), (12), (13), (14), (15) de transmettre ou de recevoir des données avec les autres unités

un ensemble de lignes de service (22).

Dans le réalisation de l'invention, le firmware est divisé en 2 catégories: le firmware collectif et les firmwares individuels. Le firmware collectif est le firmware de commande et de contrôle du système: il contient les microprogrammes de gestion du système et les tables associées. Ce firmware est mémorisé dans la mémoire de contrôle complémentaire (17). Les firmwares individuels sont contenus dans les mémoires de contrôle des processeurs associées à chacun des processeurs (11), (12), (13), (14), (15).

Tous les porocesseurs connaissent les adresses des blocs de contrôle de processus concernant les opérations qu'ils ont à effectuer. Ces adresses leur sont fournies par un module du système d'exploitation appelé le DISTRIBUTEUR DE PROCESSUS (en Anglais Dispatcher). Tout processus peut lire tout ou partie d'un bloc de contrôle de processus pour obtenir le contenu des mots qui l'intéresse. C'est le cas, en particulier, au moment du chargement d'un processus dans un processeur en vue de son exécution ou de la reprise de son exécution. Comme il a été expliqué précédement, le processeur effectue entre autre, de cette façon:

le chargement de ses 8 registres de base

le chargement de ses 16 registres généraux

le chargement des ses 8 doubles registres scientifiques

le chargement de son registre compteur d'instruction

Pour cela le processeur utilise l'ombibus d'adresse (20), l'omnibus de données (21) et les lignes de service (22).

Réciproquement, tout processeur peut modifier tout ou partie du contenu d'un bloc de contrôle en demandant l'accès à la mémoire de contrôle complémentaire en mode écriture.

La figure 6 est une représentation schématique de l'un quelconque des processeurs (11) ou (12) ou (13) ou (14) ou (15).

Ce processeur est composé des unités suivantes:

une unité arithmétique et logique (30) destinée à effectuer les opérations arithmétiques et logiques sur les données

une mémoire bloc note (31) qui contient les registres de base, les registres généraux, les registres scientifiques ainsi que différents registres de travail que l'unité arithmétique utilise.

dans ses opérations de traitement ou de sauvegarde.

une unité de communication avec le panneau opérateur et le module de maintenance (32) du système de traitement

une unité de pilotage des accès aux mémoires extérieures (33) qui établit les adresses à attendre sur l'omnibus d'adresse (20) et qui fournit les signaux de service vers les mémoires sur les lignes de service (22)

une unité de pilotage du processeur (34) qui est raccordée à la mémoire locale de contrôle (35). Cette unité décodifie les instructions du programme à exécuter et lance les microprogrammes nécessaires à l'exécution des instructions décodifiées. Les microinstructions contenues dans ces microprogrammes sont elles-mêmes décodifiées et traduites en commandes qui sont transmises vers les unités concernée. Ces commandes sont transmises par une ou plusieurs lignes désignées a, b, c, d, e, f, g, h, i, j sur la figure 6. Le fonctionnement d'une telle unité et des circuits commandés est décrit dans le livre de M. SAMIR HUSSON intitulé MICRO-PROGRAMMING—PRINCIPLES AND PRACTICES édité par PRENTICE-HALL.

une unité de chronomètrie et d'émulation (38) à laquelle est raccordé éventuellement un module optionnel d'émulation (39)

une unité d'horloge (36) qui fournit les différents signaux chronologiques.

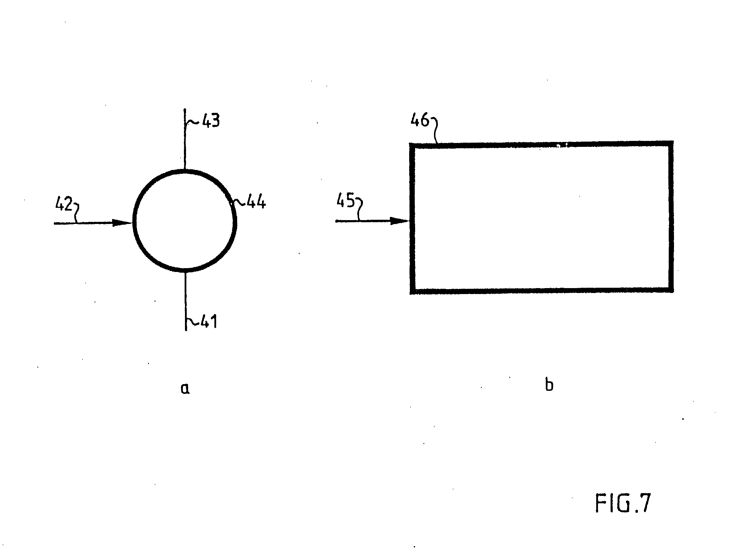

Sur la figure 7(a) est représenté un symbole utilisé sur la figure 6. Ce symbole signifie que la liaison (42) commande et contrôle la transmission entre les liaisons (41) et (43).

Sur la figure 7(b) est représenté un autre symbole utilisé sur la figure 6. Ce symbole signifie que la liaison (45) commande et contrôle le fonctionnement interne de l'unité (46).

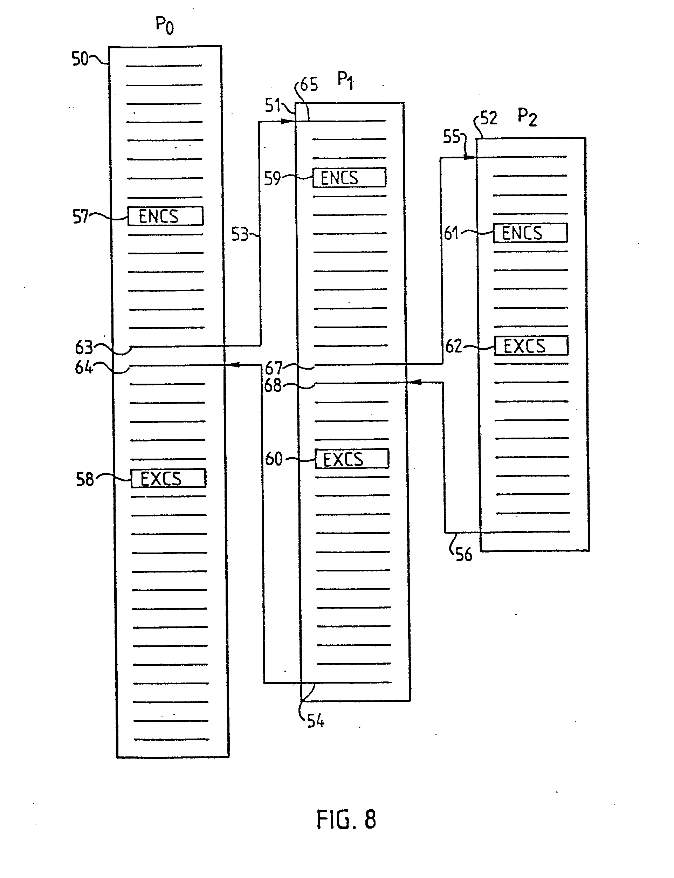

La figure 8 est une représentation symbolique du déroulement des programmes imbriqués présentant des sections critiques.

Supposons que le programme Po (50) se déroule dans le processeur. En (57) le programme nécessite l'utilisation d'une ressource critique, c'est-à-dire que cette ressource est unique pour tout le système de traitement de données et que par conséquent le processus va essayer de monopoliser cette ressource. A cet endroit (57) le programmeur a placé une instruction d'entrée en section critique ENCS (abréviation de Enter Critical Section). A cette instruction le programmeur a associé un indice i et un indice j. Ces indices permettent au programmeur de définir l'importance de la section critique: l'indice i correspond à un rang d'anneau et l'indice j est la densité à l'intérieur de l'anneau. L'indice i peut avoir pour valeur 0 ou 1 ou 2 ou 3 comme pour les anneaux d'accès aux processus: la protection la plus grande correspond à l'anneau 0 et la protection la plus faible à l'anneau 3. L'indice j peut avoir la valeur 0 ou 1 et permet d'interpoler l'importance de la section critique entre 2 anneaux. Ainsi, une section critique d'indice 10 est plus importante qu'une section critique 11 bien que ces deux sections critiques se trouvent dans l'anneau de rang 1.

Une règle importante dans l'attribution des indices des sections est que en aucun cas l'indice i soit inférieur à l'indice du processus qui porte la section critique: ainsi un processus de rang d'anneau 1 ne peut comporter que des sections critiques d'anneau 1, 2 ou 3.

Ce chiffrement de l'importance d'une section critique permet d'arbitrer les conflits de détournement du processus par une requête asynchrone en vue de la satisfaction d'un service.

En effet, les requêtes asynchrones sont également affectées d'un pouvoir de réquisition comme il a été expliqué précédemment. Ce pouvoir de réquisition est mesuré par 2 indices i et j: l'indice i correspond à un rang d'anneau et l'indice j correspond à une densité pouvant avoir la valeur 0 ou 1. Donc les requêtes asynchrones sont affectées d'un pouvoir de réquisition mesuré sur une échelle superposable à l'échelle des importances des sections critiques.

La règle d'arbitrage en cas de conflit est que le processus en état de phase critique c'est-à-dire se déroulant en sections critiques ne quitte pas sa tâche principale pour satisfaire une requête asynchrone que dans le cas où les indices i et j associés à la requête asynchrone sont tous les deux inférieurs à la totalité des indices i et j des phases critiques en vigueur.

Il a évé vu ci-dessus qu'en (57) le programmeur a placé une instruction d'entré en section critique ENCS et qu'à cette instruction il a associé deux indices i et j. A partir de ce moment là le programme se déroule en section critique. Au cours de ce déroulement, dans cet exemple, se présente en (63) un appel à un autre programme P1 (51). Le contrôle du processeur est maintenant assuré par le programme P1 (51) mais pour autant la phase critique ij est toujours valable. Au cours de son déroulement, le programme P1 présente en (59) une nouvelle instruction d'entrée en section critique pour laquelle nous supposerons que les indices i et j sont les mêmes que les indices i et j de l'instruction d'entrée en section critique (57). Le programme va maintenant se dérouler en phase de section critique de rang ij mais avec un profondeur d'imbrication égale à 2 puisque le processeur a rencontré 2 instructions d'entrée en section critique (57) et (59). Le programme P1 (51) va se poursuivre jusqu'en (67) où se présente une instruction appelant le programme P2 (52). Le programme P2 prend donc le contrôle du processeur mais le fonctionnement se poursuit dans une section critique d'indice ij avec une profondeur d'imbracation de rang 2. En (61) une instruction d'entrée en section critique ENCS qui sera supposée de même indice i et j que les instructions d'entrée en section critique (57) et (59) porte la profondeur d'imbrication de la section critique à 3. En (62) une instruction de sortie de section critique EXCS de mêmes indices i et j pour l'instruction d'entrée en section critique ENCS (62) va réduire la profondeur d'imbrication de la section critique pour la porter à 2. En effet, cette instruction de sortie de section critique (62) a fait sortir le programme P2 (52) de la section critique et donc annulé l'effet de l'instruction d'entrée en section critique ENCS (61). Le programme P2 (52) se poursuit ensuite jusqu'en 56 où une instruction de retour rend le contrôle du processeur au programme P1 (51) à l'endroit de l'instruction 68. Le déroulement du programme P1 (51) reprend donc jusqu'en (68) où le processeur rencontre une instruction de sortie de section critique EXCS (60). Cette instruction de sortie de section critique EXCS (60) fait donc sortir le programme P1 (51) de sa section critique et du même coup la profondeur d'imbrication de la section critique ij est ramenée à l. Le déroulement du programme P1 (51) se poursuit ensuite jusqu'à l'instruction (54) qui commande un retour au programme P0 (50). Ce programme P0 (50) reprend son exécution en (64) jusqu'en (68) où une instruction de sortie de section critique EXCS fait sortir le programme P0 (50) de sa section critique. La profondeur d'imbrication de la section critique est maintenant nulle. Le processus est totalement sorti de la phase d'exécution critique.

Dans cet exemple, il a été choisi des sections critiques de même classe (i, j) pour des facilités d'explication mais les sections critiques peuvent occuper des classes différentes parmi les 8 classes possibles (00, 01, 10, 11, 20, 21, 30, 31). Dans ce cas, la profondeur d'imbrication se mesure classe par classe.

Les explications qui précèdent, montrent que la mesure de la profondeur d'imbrication des sections critiques permet de suivre facilement le déroulement d'un processus en phase critique. Cette mesure de la profondeur d'imbrication est facilement obtenue en actionnant un compteur-décompteur par les signaux d'entrée en section critique ENCS et par les signaux de sortie de section critique EXCS: chaque instruction d'entrée en section critique ENCS accroît d'une unité le contenu du compteur-décompteur et chaque instruction de sortie de section critique EXCS déroît d'une unité le contenu du compteur-décompteur.

Bien entendu, il y a un compteur-décompteur par classe de section critique. Dans la réalisation préférée de l'invention ces compteurs-décompteurs sont désignés par CSC 00, CSC 01, CSC10, CSC11, CSC20, CSC21, CSC30, CSC31.

Dans la réalisation préférée de la présente invention les contenus de ces compteurs-décompteurs CSC 00, CSC 01, CSC 10, CSC 11, CSC 20, CSC 21, CSC 30 et CSC 31 sont placés dans le bloc de contrôle de processus comme il est représenté sur la figure 1(c) dans les MOTS 52 et 53. A chaque fois que le processeur où se déroule le processus rencontre une instruction d'entrée en section critique ENCS, il vient accroître d'une unité le contenu du compteur-décompteur CSCXX correspondant à la classe de cette instruction d'entrée en section critique ENCS. Réciproquement, chaque fois que le processeur rencontre une instruction de sortie de section critique EXCS il vient décroître d'une unité le contenu du compteur-décompteur CSCXX correspondant à la classe de cette instruction de sortie de section critique ECXS.

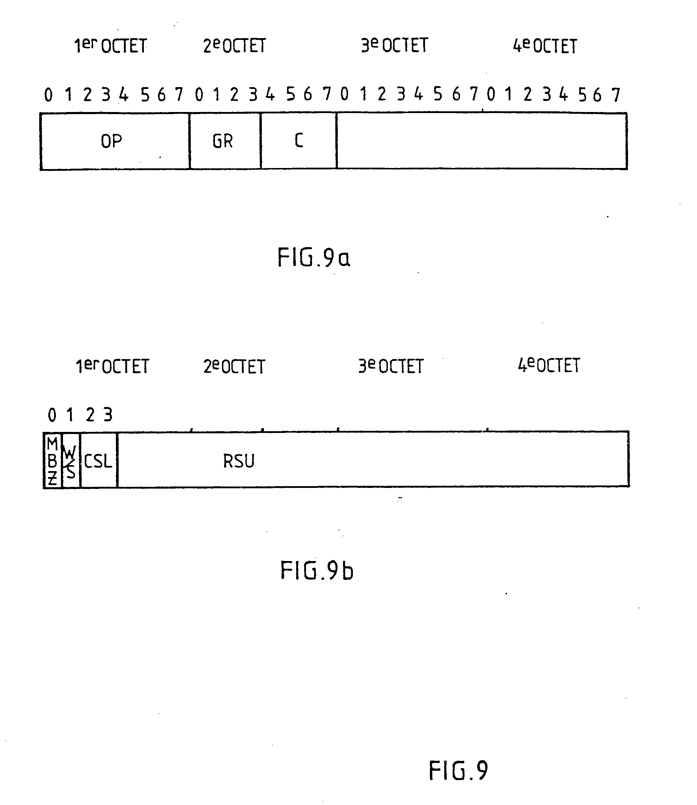

La figure 9 (a) représente le format d'une instruction d'entrée en section critique ENCS.

Le premier octet désigné par OP contient le code opération de l'instruction.

Les bits 0, 1, 2, 3, du deuxième octet désigné par GR représentent le numéro du Registre général où sont contenus les paramètres associés à l'instruction. Le format de ce registre général est décrit ci-après et est représenté sur la figure 5(b). Ce registre général est appelé registre général associé à l'instruction ENCS.

Les bits 4, 5, 6 et 7 du deuxième octet désignés par C représentent un code complémentaire associé au code opération de l'instruction.

Les 3 ème et 4 ème octets de l'instruction ne sont pas utilisés.

La figure 9 (b) représente le format du registre général associé à l'instruction ENCS.

Le bit 0 du ler octet désigné par MBZ (abréviation de Must Be Zero) doit obligatoirement être nul.

Le bit 1 du ler octet désigné par W/S (abréviation de Weak/Strong) définit le degré de classe critique à l'intérieur de l'anneau attribué à la section critique. Si ce bit est à 0 cela signifie que la section critique est très fortement critique (Strong). Si ce bit est 1 cela signifie que la section critique est modérément critique (Weak).

Les bits 2 et 3 de l'octet désigné par CSL (abréviation de Critical Section Level) définissent le rang de l'anneau correspondant à la section critique. Il y a 4 anneaux possibles numérotés de 0 à 3: l'anneau 0 est l'anneau le plus fortement protégé et l'anneau 3 est l'anneau le moins protégé. Ceci découle du mode de fonctionnement des anneaux dispositifs de protection par la méthode des anneaux.

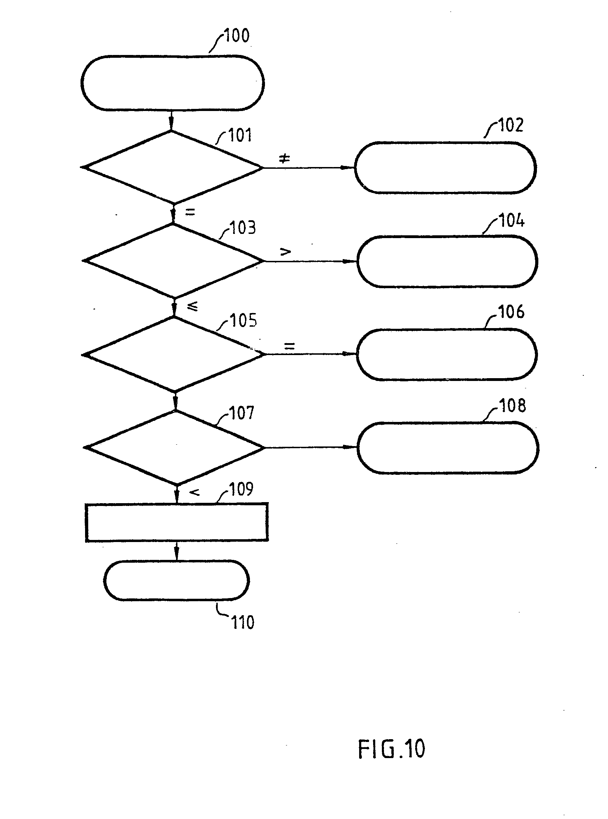

Sur la figure 10 est représenté l'organigramme de l'instruction ENCS. En 100 se trouve l'entrée dans l'organigramme, l'instruction a été décodifiée et le registre général associé à l'instruction a été localisé.

En 101 le firmware vérifie que le bit 0 du premier octet du Registre général associé à l'instruction est bien égal à zéro. Ceci est une vérification de conformité de format. Si ce bit est différent de 0 il y a en 102 émission d'un signal d'incident de donnée illégale (Illegal Data Exception). Si ce bit est égal à zéro le contrôle de conformité de format est satisfait et le déroulement de l'instruction se poursuit en 103.

En 103, le firmware vérifie la compatibilité de l'anneau associé à cette section critique. Cet anneau est défini par les bits 2 et 3 du ler octet du registre général associé à l'instruction ainsi qu'il a été expliqué précédemment et comme il est représenté sur la figure 9(b). Nous rappelons que le numéro d'anneau correspond à l'indice i dans la désignation des compteurs CSCij. Comme il a été dit auparavant, la règle veut que le numéro d'aneau associé à la section critique ne puisse pas avoir une valeur inférieure au numéro d'anneau de protection du processus en cours PRN (abréviation de Process Ring Number). Donc en 103 le firmware compare l'indice de la section critique (indiqué par CSL sur la figure 5b) avec le numéro de protection du processus PRN. Si le numéro de l'indice CSL de la section critique est inférieur au numéro de l'anneau de protection de processu PRN, il y a en (104) émission d'un signal d'incident de donnée illégale (Illegal Data exception). Si le numéro de l'indice de la section critique est supérieur ou égal au numéro de l'anneau de protection de processus PRN l'instruction est reconnue conforme et le fonctionnement se poursuit en (105).

En (105) le firmware vient vérifier si le bloc de contrôle de processus PCB comporte une extension c'est-à-dire s'il comprend les mots 52 et 53 c'est-à-dire comporte en particulier, les 8 compteurs CSC00, CSC01, CSC10..., comme représenté sur la figure 2(b). Pour cela, il vient vérifier l'état du bit 2 de l'octet 0 du MOT 0 du bloc de contrôle de processus PCB. Si ce bit est à zéro cela signifie que le bloc de contrôle de processus PCB ne comporte pas d'extension et donc pas les compteurs CSC 00, CSC 01. Dans ce cas, il y a émission en (106) d'un message d'incident pour absence d'extension du bloc de contrôle de processus PCB (PCB extension feature exception). Si ce bit est à un, le bloc de contrôle de processus PCB comporte bien, entre autres, les 8 compteurs CSC 00, CSC 01, CSC 10. . . . et le fonctionnement se poursuit en (107).

En (107) le firmware vient vérifier se le compteur CSCij défini dans l'instruction ENCS n'a pas atteint sa capacité maximale. En effet, les compteurs CSCij sont des compteurs d'une largeur d'un octet c'est-à-dire d'une capacité de comptage de 255. Le firmware vient donc lire le contenu du compteur CSCij correspondant à l'instruction et le compare au nombre 255. Si le contenu du compteur CSCij est égal au nombre 255, le compteur est saturé, il n'est pas possible d'accroître son contenu, il y a émission en (108) d'un signal de dépassement de capacité du compteur de section critique (Critical Section Count Overflow). Si le contenu du compteur CSCij est inférieur au nombre 255, il est possible d'accroître ce contenu et le fonctionnement se poursuit en (109).

En (109) le firmware accroît d'une unité le contenu du compteur CSCij. Une fois cette opération terminée le déroulement de l'instruction se poursuit en (110) qui est l'opération de sortie de l'organigramme.

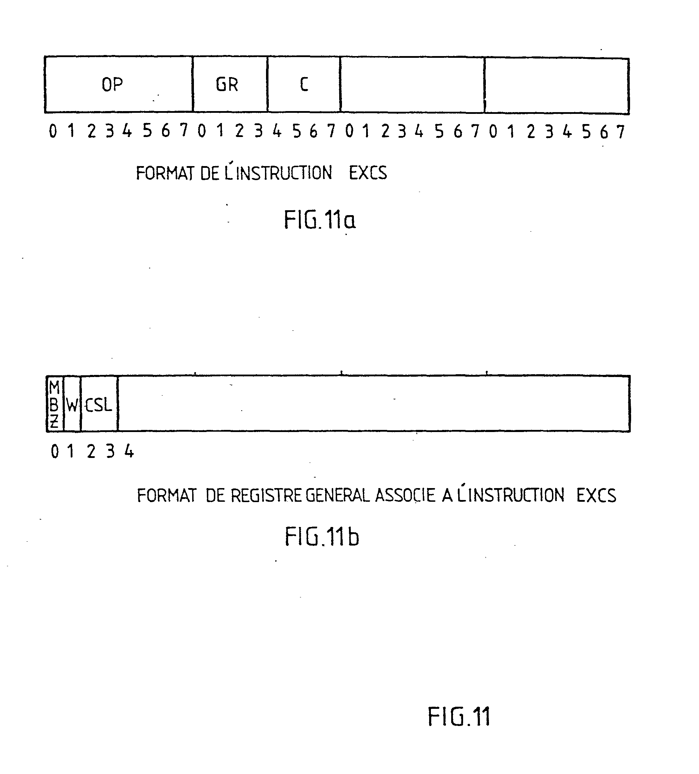

La figure 11 (a) représente le format d'une instruction EXCS.

Le premier octet désigné par OP contient le code opération de l'instruction.

Les bits 0, 1, 2, 3, du 2ème octet désignés par GR représente le numéro du Registre Général où sont contenus les paramètres associés à l'instruction. Le format de ce registre général est décrit ci-après et est représenté sur la figure 7 (b). Ce registre général est appelé registre général associé à l'instruction EXCS.

Les bits 4, 5, 6, 7 du 2ème octet désignés par C représentent un code complémentaire associé au code opération de l'instruction.

Les 3ème et 4ème octets de l'instruction ne sont pas utilisés.

La figure 11 (b) représente le format du registre général associé à l'instruction EXCS.

Le bit 0 du 1er octet désigné par MBZ (abréviation de Must Be Zero) doit obligatoirement être nul.

Le bit 1 du premier octet désigné par W/S (abréviation de Weak/Strong) définit le degré de classe critique à l'intérieur de l'anneau attribué à la section critique. Si ce bit est à zéro cela signifie que la section critique est très fortement critique (Strong). Si ce bit est à un, cela signifie que la section critique est modérément critique (Weak).

Les bits 2 et 3 du 1er octet désignés par CSL (abréviation de Critical Section Level) définissent le rang de l'anneau correspondant à la section critique. Il y a 4 anneaux possibles numérotés de 0 à 3: l'anneau 0 est l'anneau le plus fortement protégé et l'anneau 3 est l'anneau le moins protégé. Ceci découle du mode de fonctionnement des dispositifs de protection par la méthode des anneaux.

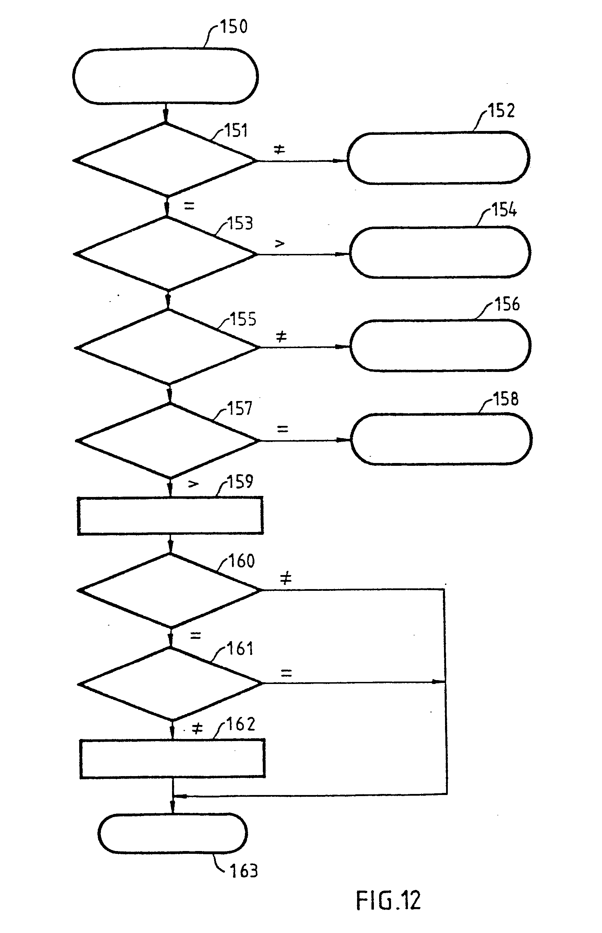

Sur la figure 12 est représenté l'organigramme de la fonction EXCS.

En 150 se trouve l'entrée dans l'organigramme, l'instruction a été décodifiée et le registre général associé à l'instruction a été localisée.

En 151 le firmware vérifie que le bit 0 du premier octet du registre général associé à l'instruction est bien égal à zéro. Ceci est une vérification de conformité de format. Si ce bit est différent de zéro, il y a en 152, émission d'un signal d'incident de donnée illégale (Illegal Data Exception). Si ce bit est bien égal à zéro ce contrôle de conformité de format est satisfait et le déroulement se poursuit en 153.

En 153, le firmware vérifie la compatibilité de l'anneau associé à cette section critique. Cet anneau CSL est défini par les bits 2 et 3 du 1er octet du registre général associé à l'instruction ainsi qu'il a été expliqué précédemment et comme il est représenté sur la figure 7b. Pour être compatible le rang de l'anneau doit être supérieur ou égale au rang de l'anneau de protection PRN (abréviation de Process Ring Number) du processus en cours de déroulement. La comparaison entre PRN et CSL est effectuée en 153. Si le rang de l'anneau CSL est inférieur au rang de l'anneau PRN de protection du processus, il y a en 154 émission d'un signal d'incident de donnée illégale (Illegal Data Exception). Se le rang de l'anneau CSL est supérieur ou égal au rang de l'anneau PRN de protection du processus l'anneau CSL est compatible avec PRN et le fonctionnement se poursuit en 155.

En 155, le firmware vient vérifier si le bloc de contrôle de Processus PCM comporte une extension, c'est-à-dire s'il comprend les mots 52 et 53, c'est-à-dire les 8 compteurs CSC comme il est représenté sur la figure 2b. Pour cela il vient vérifier l'état du bit 2 de l'octet 0 du MOT 0 du bloc de contrôle de processus PCB. Si ce bit est à zéro, cela signifie que le bloc de contrôle de processus PCB ne comporte pas d'extension et par conséquent ne comporte pas les 8 compteurs CSC. Dans ce cas, il y a émission en (156) d'un message d'incident pour absence d'extension du bloc de contrôle de processus PCB (PCB extension feature exception). Si ce bit est à un, cela indique que le bloc de contrôle de processus PCB comporte bien entre autres, les 8 compteurs CSC et le fonctionnement se poursuit en (157).

En (157) le firmware vient vérifier si le contenu du compteur CSCij désigné par l'instructoin n'est pas nul. Si ce contenu est nul cela signifie que le processus n'est plus dans une section critique. En d'autres termes, soit le firmware aura recontré autant d'instructions d'entrée en section critique ENCS que d'instructions de sortie de section critique EXCS, soit le firmware n'a pas encore recontré d'instruction d'entrée en section critique ENCS. Dans cette condition, le recontre d'une instruction de sortie de section critique constitue une anomalie et en (158) il y a émission d'un signal d'anomalie sur le compteur de section critique (Critical Section Out of Range). Si le contenu du compteur est supérieur à zéro l'instruction de sortie de section critique est acceptée et le fonctionnement se poursuit en 159.

En (159) le firmware met à jour le contenu du compteur de section critique CSij associé à l'instruction EXCS en retranchant une unité de ce contenu. Ensuite le fonctionnement se poursuit en (160) où le firmware examine le nouveau contenu du compteur CSij associé à l'instruction. Si ce contenu est différent de zéro, cela signifie que le processus est toujours en zone critique et le fonctionnement se poursuit en (163) qui est l'opération de sortie de l'instruction EXCS, Si le nouveau contenu du compteur CSCij associé à l'instruction EXCS est nul, cela signifie que cette instruction EXCS a fait sortir le processus de la zone critique. Cette sortie de la zone critique enlève les restrictions correspondantes imposées aux réquisitions externes. Le firmware vient donc en (161) examiner les octets ATQR (octet 3 du MOT 1 du PCB) afin de voir l'état du bit correspondant à l'anneau et au degré de classe critique définis par l'instruction EXCS. Si ce bit est à zéro, cela signifie qu'il n'y a pas eu de réquisition formulée pour cet anneau et ce degré de classe critique et le fonctionnement se poursuit en (163) où se trouve la sortie de l'instruction EXCS. Si ce bit est à un, cela signifie qu'il y au moins une demande de réquisition en souffrance à ce niveau de censure. La censure étant levée par le compte nul le fonctionnement se poursuit en (162).

En (162) le firmware alerte le système d'exploitation, la levée de la censure sur cette réquisition en positionnant à un en (162) le bit ALARM (bit 4 de l'octet Priority qui est l'octet 1 du MOT 0 du PCB). C'est le bit Alarm qui va permettre au processus requis d'abandonner sa tâche principale pour prendre en compte le traitement de cette réquisition.

Enfin l'instruction étant complètement traitée le fonctionnement se poursuit en (163) qui est la sortie de l'organigramme.

**Revendications**

1. Procédé d'arbitrage, dans un système de traitement de données à multiprocesseurs comportant un distributeur de processus coopérant avec un bloc de contrôle de processus servant à mémoriser l'état de chaque processus en traitement dans le système, des tentatives de réquisition par un ou plusieurs requêtes asynchrones d'un processus pouvant présenter des phases de déroulement en section critique caractérisé en ce que, un pouvoir de réquisition étant associée à chaque requête asynchrone et une classe d'état critique étant associée à chaque section critique,

à chaque fois qu'un processus en cours d'exécution dans le système entre dans une phase de déroulement en section critique d'une classe déterminée, un indicateur (CSCij) d'occupation de cette classe est incrémenté de un; ledit indicateur étant dit armé le première fois que ledit processus entre dans une section critique de cette classe;

à chaque fois qu'un processus en cours d'exécution dans le système sort d'une phase de déroulement en section critique d'une classe déterminée, un indicateur (CSCij) d'occupation de cette classe est décrémenté du un;

à chaque arrivée d'une requête asynchrone d'un processus, un indicateur de présence de requête asynchrone correspondant au pouvoir de réquisition de cette requête est positionné à un et le contenu des indicateurs d'occupation des classes critiques est testé et si au moins un des indicateurs d'occupation correspondant à une classe critique d'importance égale ou supérieure au pouvoir de réquisition de la requête asynchrone est armé, la requête asynchrone n'est pas prise en compte par le processus alors que dans le cas contraire, la requête asynchrone étant acceptée par le processus, ledit indicateur de requête asynchrone est remis à zéro.

2. Procédé selon la revendication 1, caractérisé en ce que l'entrée ou la sortie d'une phase de déroulement en section critique est détectée lors de l'exécution d'une instruction d'entrée en ou de sortie de section critique (ENCS, EXCS) correspondant à la classe de la section critique, lesdites instructions (ENCS, EXCS) faisant partie des instructions du processus.

3. Système de traitement de données à multiprocesseurs comportant un distributeur de processus coopérant avec un bloc de contrôle de processus (PCB) servant à mémoriser l'état de chaque processus en traitement dans le système caractérisé en ce que le bloc de contrôle de processus (PCB) comprend pour chaque processus des emplacements de mémoire (MOT 1) servant à mémoriser un bit indicatif de la présence d'une requête asynchrone (ATQR), chacun desdits emplacements de mémoire étant associé à une puissance de réquisition d'une requête asynchrone; en ce que chaque bloc de contrôle de processus (PCB) comprend plusieurs emplacements de mémoire (MOTS 52 et 53) servant chacun à mémoriser l'état d'un compteur-décompteur (CSCij) appartenant au processeur affecté au processus, chaque compteur-décompteur étant associée à une classe de section critique; en ce que chaque processeur du système comprend des moyens pour détecter l'exécution d'une instruction d'entrée en section critique (ENCS) d'une classe déterminée et incrémenter d'une unité le compteur-décompteur correspondant à cette classe et des moyens pour détecter l'exécution d'une instruction de sortie de section critique (EXCS) d'une classe déterminée et décrémenter d'une unité le compteur-décompteur correspondant; en ce que le système comprend des moyens pour filtrer les requêtes asynchrones ayant un pouvoir supérieur aux classes critiques occupées, lesdites occupations étant détectées par l'état non nul des compteurs-décompteurs associés à ces classes.

**Patentansprüche**

1. Schlichtungsverfahren in einem Multiprozessor-Datenverarbeitungsystem, das einen Prozeßverteiler umfaßt, welcher mit einem Prozeß-Steuerblock zusammenwirkt, der dazu dient, den Zustand jedes im System in Verarbeitung befindlichen Prozesses zu speichern, wobei Belegungsversuche, die durch eine oder mehrere asynchrone Anforderungen eines Prozesses auftreten, Abwicklungsphasen im kritischen Abschnitt aufweisen können, dadurch gekennzeichnet, daß jeder asynchronen Anforderung ein Belegungsrang zugeordnet ist und eine Klasse kritischen Zustandes jedem kritischen Abschnitt zugeordnet ist,

jedesmal, wenn ein im System in der Ausführung befindlicher Prozeß in eine Abwicklungsphase im kritischen Abschnitt einer bestimmten Klasse eintritt, ein Belegungsanzeiger (CSCij) für diese Klasse um Eins inkrementiert wird; wobei der genannte Anzeiger als "gespannt" bezeichnet wird, wenn der genannte Prozeß zum ersten Mal in einen kritischen Abschnitt dieser Klasse eintritt;

jedesmal, wenn ein in dem System in der Abwicklung befindlicher Prozeß aus einer Abwicklungsphase im kritischen Abschnitt einer bestimmten Klasse austritt, ein Belegungsanzeiger (CSCij) in dieser Klasse um Eins dekrementiert wird;

bei jeder Ankunft einer asynchronen Anforderung eines Prozesses ein Anzeiger für die Anwesenheit einer asynchronen Anforderung, welcher dem Belegungsrang dieser Anforderung entspricht, auf Eins gesetzt wird und der Inhalt der Belegungsanzeiger der kritischen Klassen geprüft wird, und wenn wenigstens einer der Belegungsanzeiger, der einer kritischen Klasse entspricht, deren Bedeutung gleich dem Belegungsrang der asynchronen Anforderung oder größer als dieser ist, gespannt ist, wird die asynchrone Anforderung durch den Prozeß nicht berücksichtigt, während im entgegengesetzten Falle die asynchrone Anforderung vom Prozeß akzeptiert wird, wobei der Anzeiger für die asynchrone Anforderung auf Null zurückgesetzt wird.

2. Verfahren nach Anspruch 1, dadurch gekennzeichnet, daß das Eintreten in eine Abwicklungsphase im kritischen Abschnitt oder das Verlassen einer solchen Phase bei der Ausführung eines Eintritts- bzw. Austrittsbefehles für den kritischen Abschnitt (ENCS, EXCS), jeweils entsprechend der Klasse des kritischen Abschnittes, festgestellt wird, wobei die genannten Befehle (ENCS, EXCS) Bestandteil der Prozeßbefehle sind.

3. Multiprozessor-Datenverarbeitungssytem, das einen Prozeßverteiler enthält, welcher mit einem Prozeß-Steuerblock (PCB) zusammenwirkt, welcher dazu dient, den Zustand jedes in dem System in Verarbeitung befindlichen Prozesses zu speichern, dadurch gekennzeichnet, daß der Prozeß-Steuerblock (PCB) für jeden Prozeß Speicherplätze (MOT 1) umfaßt, die dazu dienen, ein Anzeigebit für die Anwesenheit einer asynchronen Anforderung (ATQR) zu speichern, wobei die genannten Speicherplätze einem Belegungsrang einer asynchronen Anforderung zugeordnet sind; daß jeder Prozeß-Steuerblock (PCB) mehrere Speicherplätze (MOTS 52 und 53) enthält, die jeweils zur Speicherung eines Aufwärts/Abwärts-Zählers (CSCij) dienen, welcher zu dem Prozessor gehört, der dem Prozeß zugewiesen ist, wobei jeder Aufwärts/Abwärts-Zähler einer Klasse des kritischen Abschnittes zugeordnet ist; daß jeder Prozessor eines Systems Mittel umfaßt, um die Ausführung eines Eintrittsbefehls zum Eintreten in einen kritischen Abschnitt (ENCS) einer bestimmten Klasse festzustellen und den dieser Klasse entsprechenden Aufwärts/Abwärts-Zähler um eine Einheit zu inkrementieren, und Mittel umfaß, um die Ausführung eines Befehles zum Verlassen eines kritischen Abschnittes (EXCS) einer bestimmten Klasse festzustellen und den entsprechenden Aufwärts/Abwärts-Zähler um eine Einheit zu dekrementieren; und daß das System Mittel umfaßt, um die asynchronen Anforderungen herauszufiltern, die einen Belegungsrang aufweisen, welcher größer als die kritischen belegten Klassen ist, wobei die genannten Belegungen dadurch festgestellt werden, daß die diesen Klassen zugeordneten Aufwärts/Abwärts-Zähler nicht den Zustand Null aufweisen.

**Claims**

1. An arbitration method, in a data processing system incorporating multiprocessors, comprising a process dispatcher cooperating with a process control block serving to store the state of each process undergoing treatment within the system, the attempted requisition by means of one or more asynchronous requests of a process that may to present phases of development in a critical section, characterised in that a requisition capacity being associated with each asynchronous request and a critical state level being allocated to each critical section,

each time a process in the course of execution within the system enters into a phase of development in a critical section of a particular level, a unit (CSCij) indicating occupation of this level is incremented by unity; the said indicator being referred to as being primed the first time the said process enters into a critical section of this level

each time a process in the course of execution within the system emerges from a phase of development in a critical section of a particular level a unit (CSCij) indicating occupation of this level is decremented by unity;

at each reception of an asynchronous request of a process, an asynchronous request presence indicator corresponding to the requisition capacity of this request is positioned at unity and the contents of the occupation indicators of the critical levels are checked and if at least one of the occupation indicators corresponding to a critical level of a state equal to or greater than requisition capacity of the asynchronous request is primed, the asynchronous request is disregarded by the process, whereas in the contrary case, the asynchronous request being accepted by the process, the said asynchronous request indicator is reset to zero.

2. A method according to claim 1, characterised in that the start or the finish of a phase of development in a critical section is detected upon execution of an instruction for entering or leaving a critical section (ENCS, EXCS) corresponding to the level of the critical section, the said instructions (ENCS, EXCS) forming part of the process instructions.

3. A data processing system incorporating multiprocessors, comprising a process distributor cooperating with a process control block (PCB) serving the purpose of storing the state of each process undergoing treatment within the system, characterised in that the process control unit (PCB) comprises memory locations (MOT 1) for each process, serving the purpose of storing a bit indicating the presence of an asynchronous request (ATQR), each of the said memory locations being associated with a requisition capacity of an asynchronous request; in that each process control unit (PCB) comprises several memory locations (MOTS 52 and 53) each serving the purpose of storing the state of an adding-subtracting counter (CSCij) appertaining to the process allocated to the process, each adding-subtracting counter being allocated to a critical section level in that each processor of the system comprises means for detecting the execution of an instruction to enter into a critical section (ENCS) of a particular classification and to increment by one unity the corresponding adding-subtracting counter corresponding to this level and means for detecting the execution of an instruction for leaving the critical section (EXCS) of a particular level and to cause decrementation by one unity of the corresponding adding-subtracting counter; in that the system comprises means for filtering the asynchronous request having a higher status than the critical levels occupied, the said occupations being detected by the non-zero state of the adding subtracting counters allocated to these levels.

|  | OCTET 0 | OCTET 1 | OCTET 2 | OCTET 3 |
|---|---|---|---|---|
| MOT-10 |  |  |  |  |
| MOT- 9 |  |  |  |  |
| MOT- 8 |  |  |  |  |
| MOT- 7 |  |  |  |  |
| MOT- 6 |  |  |  |  |
| MOT -5 |  |  |  |  |
| MOT -4 |  |  |  |  |
| MOT -3 |  |  |  |  |
| MOT -2 |  |  |  |  |
| MOT -1 |  |  |  |  |
| MOT 0 | CAP | PRI |  |  |
| MOT 1 |  |  |  | ATQR |
| MOT 2 |  |  |  |  |
| MOT 3 |  |  |  |  |
| MOT 4 |  |  |  |  |
| MOT 5 |  |  |  |  |
| MOT 6 |  |  |  |  |
| MOT 7 |  |  |  |  |
| MOT 8 |  | I C W |  |  |
| MOT 9 |  |  |  |  |
| MOT 10 |  |  |  |  |
| MOT 11 |  |  |  |  |
| MOT 12 |  |  |  |  |

FIG.1a

1

| | OCTET 0 | OCTET 1 | OCTET 2 | OCTET 3 |
|---|---|---|---|---|
| MOT 13 | | | | |
| MOT 14 | | | | |
| MOT 15 | | | | |
| MOT 16 | | | | |
| MOT 17 | | | | |
| MOT 18 | | | | |
| MOT 19 | | | | |
| MOT 20 | | | | |
| MOT 21 | | | | |
| MOT 22 | | | | |
| MOT 23 | | | | |
| MOT 24 | | | | |
| MOT 25 | | | | |
| MOT 26 | | | | |
| MOT 27 | | | | |
| MOT 28 | | | | |
| MOT 29 | | | | |
| MOT 30 | | | | |
| MOT 31 | | | | |
| MOT 32 | | | | |
| MOT 33 | | | | |
| MOT 34 | | | | |
| MOT 35 | | | | |
| MOT 36 | | | | |
| MOT 37 | | | | |
| MOT 38 | | | | |
| MOT 39 | | | | |
| MOT 40 | | | | |
| MOT 41 | | | | |
| MOT 42 | | | | |
| MOT 43 | | | | |
| MOT 44 | | | | |

FIG.1b

| | OCTET 0 | OCTET 1 | OCTET 2 | OCTET 3 |
|---|---|---|---|---|
| MOT 45 | | | | |
| MOT 46 | | | | |
| MOT 47 | | | | |
| MOT 48 | | | | |
| MOT 49 | | | | |
| MOT 50 | | | | |
| MOT 51 | | | | |
| MOT 52 | CSC 00 | CSC 01 | CSC 10 | CSC 11 |
| MOT 53 | CSC 20 | CSC 21 | CSC 30 | CSC 31 |
| MOT 54 | | | | |
| MOT 55 | | | | |
| MOT 56 | | | | |
| MOT 57 | | | | |
| MOT 58 | | | | |
| MOT 59 | | | | |
| MOT 60 | | | | |
| MOT 61 | | | | |
| MOT 62 | | | | |
| MOT 63 | | | | |
| MOT 64 | | | | |

FIG.1c

BIT →  0 1 2 3 4 5 6 7

MBZ

FIG.2

BIT →  0 1 2 3 4 5 6 7

PL   AB   NFS   ARN

FIG.3

i →   0 0 1 1 2 2 3 3
j →   0 1 0 1 0 1 0 1
BIT →  0 1 2 3 4 5 6 7

FIG.4

VERS LES PERIPHERIQUES   VERS LES PERIPHERIQUES

FIG.5

0 033 264

FIG. 6

vers panneau
operateur et module
maintenance

0 033 264

43

42

44

41

a

46

45

b

FIG.7

FIG. 8

1er OCTET  2e OCTET  3e OCTET  4e OCTET

0 1 2 3 4 5 6 7 0 1 2 3 4 5 6 7 0 1 2 3 4 5 6 7 0 1 2 3 4 5 6 7

| OP | GR | C | |
|---|---|---|---|

FIG.9a

1er OCTET  2e OCTET  3e OCTET  4e OCTET

0 1 2 3

| M B Z | W Z S | CSL | RSU |
|---|---|---|---|

FIG.9b

FIG.9

9

FIG.10

| OP | GR | C | | |
|----|----|----|----|----|

0 1 2 3 4 5 6 7 0 1 2 3 4 5 6 7 0 1 2 3 4 5 6 7 0 1 2 3 4 5 6 7

FORMAT DE L'INSTRUCTION EXCS

FIG.11a

| M B Z | W | CSL | |
|-------|---|-----|---|

0 1 2 3 4

FORMAT DE REGISTRE GENERAL ASSOCIE A L'INSTRUCTION EXCS

FIG.11b

FIG.11

FIG.12